(19) **Europäisches Patentamt / European Patent Office / Office européen des brevets**

(11) **EP 1 592 259 B1**

(12) **EUROPEAN PATENT SPECIFICATION**

(45) Date of publication and mention
of the grant of the patent:
**05.10.2011 Bulletin 2011/40**

(51) Int Cl.:
*H04N 7/68* (2006.01)    *H04N 5/44* (2011.01)
*H04N 7/01* (2006.01)    *H04N 5/14* (2006.01)

(21) Application number: **04010302.0**

(22) Date of filing: **30.04.2004**

(54) **Processing auxiliary data of video sequences**

Verarbeitung von Hilfsdaten von Videosequenzen

Traitement de données additionnelles de séquences vidéo

(84) Designated Contracting States:
**DE FR GB**

(43) Date of publication of application:
**02.11.2005 Bulletin 2005/44**

(73) Proprietor: **Panasonic Corporation**
**Kadoma-shi**
**Osaka 571-8501 (JP)**

(72) Inventors:
• **Werner, Lothar**
**63110 Rodgau (DE)**
• **Landsiedel, Thilo**
**63110 Rodgau (DE)**

(74) Representative: **Grünecker, Kinkeldey,**
**Stockmair & Schwanhäusser**
**Anwaltssozietät**
**Leopoldstrasse 4**
**80802 München (DE)**

(56) References cited:
EP-A- 0 590 663    WO-A-01/52552
US-A- 5 305 104    US-A- 5 809 231
US-A- 6 094 228    US-A- 6 141 448

• YAO WANG; QIN-FAN ZHU: "Error Control and Concealment for Video Communication: A Review", PROCEEDINGS OF THE IEEE, vol. 86, no. 5, 1 May 1998 (1998-05-01), XP011044024, IEEE. NEW YORK, US
• JENSEN K.; ANASTASSIOU D.: "DIGITALLY ASSISTED DEINTERLACING FOR EDTV", IEEE TRANSACTIONS ON CIRCUITS AND SYSTEMS FOR VIDEO TECHNOLOGY, vol. 3, no. 2, 1 April 1993 (1993-04-01), pages 99-106, XP000367175, IEEE SERVICE CENTER, PISCATAWAY, NJ, US

**Description**

The present invention relates to a method and signal processor for processing auxiliary data of video sequences. In particular, the present invention relates to a pre-processing of auxiliary data of video sequences in order to achieve an improved processing of video sequences, in particular for interpolation purposes.

Motion estimation is employed in an increasing number of applications, in particular, in digital signal processing of modern television receivers. Specifically, modern television receivers perform a frame-rate conversion, especially in form of an up-conversion or motion compensated up-conversion, for increasing the picture quality of the reproduced images. Motion compensated up-conversion is performed, for instance, for video sequences having a field or frame frequency of 50 Hz to higher frequencies like 60 Hz, 66.67 Hz, 75 Hz, 100 Hz etc. While a 50 Hz input signal frequency mainly applies to television signal broadcasts based on PAL or SECAM standard, NTSC based video signals have an input frequency of 60 Hz. A 60 Hz input video signal may be up-converted to higher frequencies like 72 Hz, 80 Hz, 90 Hz, 120 Hz etc.

During up-conversion, intermediate images are to be generated, which reflect the video content at positions in time which are not represented by the 50 Hz or 60 Hz input video sequence. For this purpose, the motion of objects has to be taken into account in order to appropriately reflect the changes between subsequent images caused by the motion of objects. The motion of objects is calculated on a block basis, and motion compensation is performed based on the relative position in time of the newly generated image between the previous and subsequent images.

In order to enable a processing of picture improvement algorithms, a number of characteristic information items of the video sequence to be processed are required. These information items are preferably obtained on a block basis. The characteristic information include data indicating whether a block includes still image data or moving image data, data indicating whether or not the image information of a block stem from motion pictures (film mode), and data indicating the motion phase pattern in case of film mode. These data enable a selection of the appropriate image data for interpolation purposes.

The generation and transmission of video data together with motion vectors on a block basis is described in EP-A-0 596 963. The received encoded information is decoded and the decoded video data is subjected to a motion compensated processing at the decoder side. For transmission purposes of the encoded video signal, the motion vectors are transmitted by applying forward error correction and transmitting forward error correction bits.

An interpolation processing of field based video signals is known from WO-A-01 /52552. For determining an interpolation control signal, two field difference signals are generated. Based thereon, flag signals are produced which indicate the presence of video material or film material, respectively. For generating a control signal for the interpolation process, the process producing the flag signals has a hysteresis.

An error-correction method for the transmission of a block-based video data is described in reference US-A-6, 141, 448. For permitting a complete or partial construction of the information of a package lost during transmission, an additional "erasure" slice of video data is constructed. For the construction of the additional slice of video data, the macro blocks of the other slices located in the same column are used. Specifically, the motion vector data of picture frames are linearly combined for generating the erasure slice.

US-A-6, 094, 228 describes the encoding of a data in the visible portion of a transmitted video signal. The data is transmitted in form of groups of data bits, each of which being associated to one of a predetermined number of longer sequences. A longer sequence is divided into a plurality of lines for transmission wherein each of the lines is transmitted together with its inverse in a pair-wise fashion.

The present invention aims to enable an image processing with improved picture quality based on an enhancement of auxiliary data of a video sequence to be processed.

This is achieved by the features of the independent claims.

It is the particular approach of the present invention to detect abnormal patterns of auxiliary information and to eliminate such patterns therefrom. In this manner, an auxiliary information item reflecting an abnormal behavior compared to its surrounding is eliminated and replaced by a more likely information value. Accordingly, a picture improvement processing is able to apply a smoothened field of auxiliary information as implausible information items are replaced by more plausible ones.

Preferably, the auxiliary information represents characteristic information of the video sequence. By applying the present invention, defective determinations can be removed from the auxiliary data.

According to a preferred embodiment, the auxiliary information indicates whether or not an image block contains motion or still image data. Accordingly, the application of a motion compensated interpolation can be put on a more reliable basis by removing unlikely data items.

Preferably, a single bit is provided for each block in order to indicate motion or still image data.

Preferably, the auxiliary information includes information indicating whether or not an image block contains film mode or video mode data. Most preferably, a single bit is provided therefore. By removing unlikely film mode or video mode indications, an improved motion compensated interpolation result can be achieved.

Preferably, the auxiliary information further indicates an individual motion scheme of a film mode block.

In this manner, a picture quality improvement algorithm can accurately take the motion phase pattern of pull down schemes into account during interpolation processing.

Preferably, three bits are provided for the indication of an individual motion scheme. Most preferably, these three bits indicate at least two bit combinations representing a PAL motion phase pattern, five bit combinations which represent NTSC motion phase pattern and a single bit combination representing an image scene change. In this manner, a small number of bits can be used to represent all most likely pull down motion patterns for world-wide applications.

Preferably, the filtering is performed either in row or column direction. In this manner, an irregularity can be efficiently detected by employing only a small computational effort.

Preferably, those auxiliary data items are removed which do not have at least two neighboring data items of a corresponding value in horizontal or vertical direction. According to an alternative embodiment, individual auxiliary data items are removed which do not have at least a single neighboring data item of a corresponding value in horizontal and at least a single neighboring data item of a corresponding value in vertical direction. According to another alternative embodiment, auxiliary data items are removed which do not have at least two corresponding data items at an adjacent position. Accordingly, individual regularities can efficiently be removed from the field of the data items.

Preferably, the removed data item is replaced by the data item of a neighboring block. In this manner, an efficient concealment scheme with low computational and hardware effort can be applied.

Preferably, the detection of an irregularity is performed by comparing a current pattern of block data with pre-stored irregularity patterns. Upon detecting the current pattern to match a pre-stored irregularity pattern, the current pattern is replaced. By providing a plurality of predefined irregularity patterns, possible irregularity configurations can reliably be detected and removed.

Preferably, a replacement pattern is stored in association with a respective irregularity pattern. Consequently, the most appropriate replacement pattern is available upon detecting an irregularity based on a stored regularity pattern.

While an embodiment of low hardware complexity employs patterns of a three data items length, a more sophisticated approach employs a pattern extending in two directions. Such a two dimensional pattern approach enables to detect a plurality of unlikely irregularities with increased efficiency and reliability.

Preferred embodiments of the present invention are the subject matter of the dependent claims.

Other embodiments and advantages of the present invention will become more apparent from the following description of preferred embodiments, in which:

Fig. 1    illustrates an example for dividing a video image into plurality of blocks of uniform size,

Fig. 2    illustrates examples for auxiliary information provided for each block of a video image,

Fig. 3    illustrates examples for common pull down schemes in order to convert motion picture data into interlaced PAL and NTSC video sequences,

Fig. 4    illustrates an example encoding of auxiliary data indicating a motion phase,

Fig. 5    illustrates an example field of auxiliary data wherein individual irregularities are removed by applying a horizontal and vertical filtering,

Fig. 6    illustrates the application of a horizontal filtering in order to remove irregularities of one block width,

Fig. 7    is a flowchart showing the steps for a filter processing,

Fig. 8    is a flowchart showing the steps for a filter processing to be applied to motion phase data upon replacing a mode data item, and

Fig. 9    illustrates the memory capacity required for a respective vertical filtering.

The present invention relates to digital signal processing, especially to signal processing in modern television receivers. Modern television receivers employ up-conversion algorithms in order to increase the reproduced picture quality. For this purpose, intermediate images are to be generated from two subsequent images. For generating an intermediate image, the motion of objects has to be taken into account in order to appropriately adapt the object position to the point of time reflected by the interpolated image.

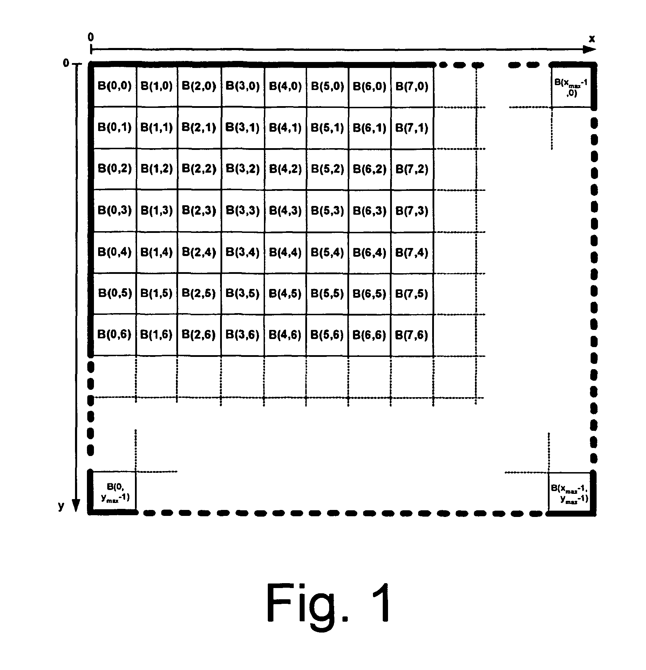

Motion estimation is performed on a block basis. For this purpose, each received image is divided into a plurality of blocks as illustrated in Fig. 1. Each current block is individually subjected to motion estimation by determining a best matching block in the previous image.

Fig. 1 illustrates the division of each video image into a plurality of blocks B(x,y). Each block has a width X and a height Y wherein X and Y represent the number of pixels in the line and column direction, respectively. The number of blocks per row or column can be calculated by employing the following formulas:

$$x_{max} = \text{Pixels per line} / X$$

$$y_{max} = \text{Pixels per column} / Y$$

The digital signal processing in modern television receivers applies picture improvement algorithms, which make use of auxiliary data reflecting characteristic information of the video sequence to be processed. For this purpose, a still image/motion image indication, a film/video indication and a motion phase indication are preferably included on a block basis into the auxiliary data. These data result from a Block Mode Detection (BMD) processing. The block mode detection is part of a feature for modern media display devices like CRT, TFT or plasma displays. It is the main function of BMD to automatically select the settings for signal processing in order to achieve the best picture quality of the current video data.

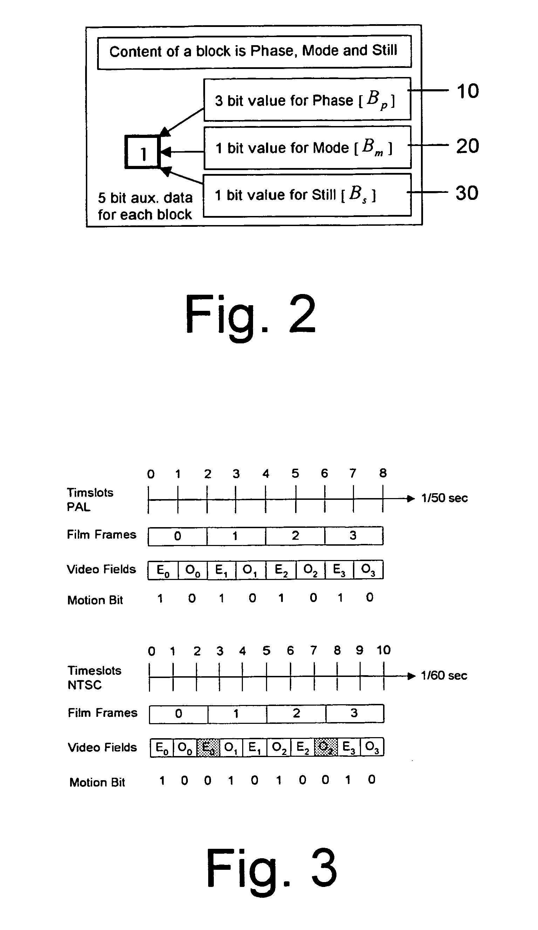

The auxiliary information is available for each block of each incoming video field, wherein the individual data items are stored in form of a block matrix. Examples of the individual information retrieved for each block is illustrated in Fig. 2. As can be seen therefrom, for each block, the auxiliary information includes a still/motion indication 30, a film/video mode indication 20, and a motion phase indication 10.

The motion/still information 30 is one bit wide ($B_s$) and enables to determine whether or not the current block of the input field relates to a moving or still object. If a still block is indicated, the image data from two subsequent fields can be used for re-interleaving in order to achieve the best picture quality output. Preferably, the sill/motion bit is defined as follows:

$$0 = \text{motion}$$

$$1 = \text{still}$$

A further bit ($B_m$) is employed in order to indicate film mode or video mode. If the data of the current block stems from film mode, two (A+B) or three (A+B+A) fields relate to the same motion phase. In contrast, in video mode each field relates to a different motion phase. The film/video mode bit ($B_m$) is preferably defined as follows:

$$0 = \text{video camera}$$

$$1 = \text{motion picture film}$$

In case of motion picture data, a three bit phase information ($B_p$) is additionally provided. This three bit information ($B_p$) reflects the motion phase pattern of the current film data.

In contrast to interlaced video signals, motion picture data is composed of complete frames. The most wide spread frame rate of motion picture data is 24 Hz. When transforming motion picture data into an interlaced video sequence for display on a television receiver, the 24 Hz frame rate is converted into an interlaced video sequence by employing a "pull down" technique.

For converting motion picture film into interlaced PAL of a field rate of 50 Hz, a two-two pull down technique is employed. The two-two pull down technique generates two fields out of each film frame. The motion picture film is played at 25 frames per second. Consequently, two succeeding fields contain information originating from the same frame.

When converting motion picture into NTSC having a field rate of 60 Hz, the frame rate of 24 Hz is converted into a 60 Hz field rate employing a three-two pull down technique. This three-two pull down technique generates two video fields from a given motion picture frame and three video fields from the next motion picture frame. As can be learned from the pull down techniques described above the resulting video sequences include pairs or triplets of adjacent fields reflecting an identical motion phase. The pull down techniques employed for converting motion picture frames into video fields in accordance with the PAL or NTSC standard are illustrated in Fig. 3.

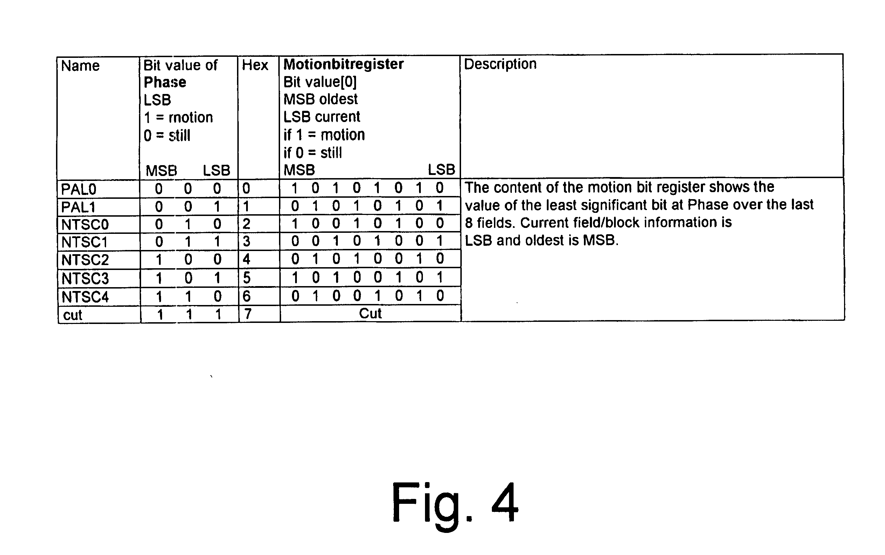

Motion phases, reflected by the motion phase bits ($B_p$), are illustrated, by way of example, in Fig. 4. While the first column differentiates the individual bit combinations provided for PAL and NTSC motion phases, the respective motion phase sequences are illustrated in column four. The second column represents a respective three bit encoding thereof and the third column the according hexadecimal value.

Present picture quality improvement algorithms have to cope with irregular or defective auxiliary information, in particular for the still/motion indication, the film/video mode indication, and/or the motion phase indication. These irregularities result in a respectively impaired picture quality.

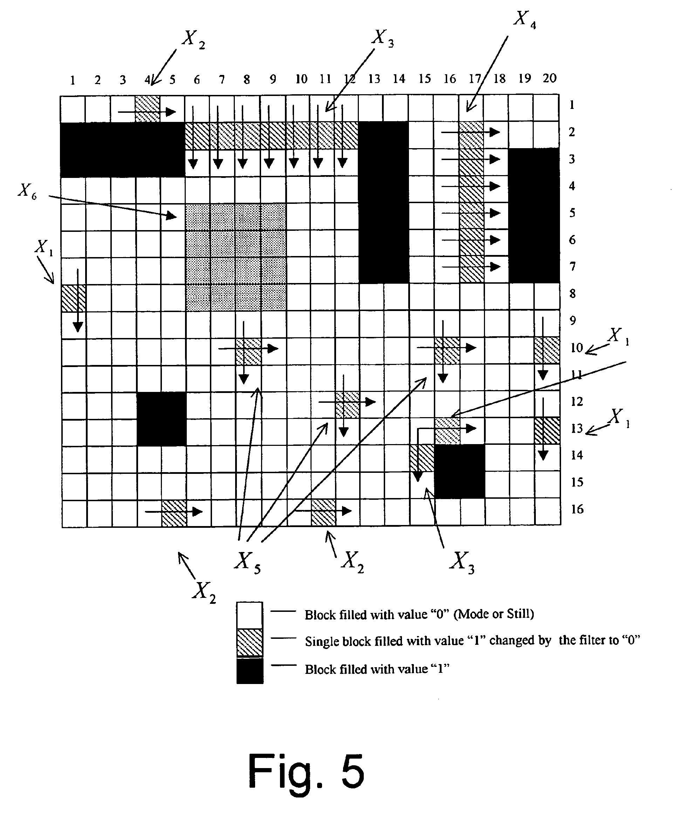

The present invention removes such irregularities by applying a filtering to a field of auxiliary information items. For this purpose, the present invention exploits the spatial neighborhood of each auxiliary data item in order to detect irregular data items. An example for removing irregular data items is illustrated in Fig. 5.

Fig. 5 illustrates a field of 20x16 blocks. The indicated example relates to binary indication such like a mode/still data indication or a film/video mode indication. While all white colored blocks relate to a binary value of zero, the black colored blocks relate to a binary value of one. Further, the dashed blocks of Fig. 5 also represent a binary value of one, however only having a width of one block. These blocks are detected and removed by either horizontal filtering ($X_2$, $X_4$) or by vertical filtering ($X_1$, $X_3$). Some of the irregularities can be removed by horizontal or alternatively by vertical filtering ($X_5$). The single blocks located at the borders of the illustrated field of data items are only removed by either applying a horizontal ($X_1$) or vertical filtering ($X_2$).

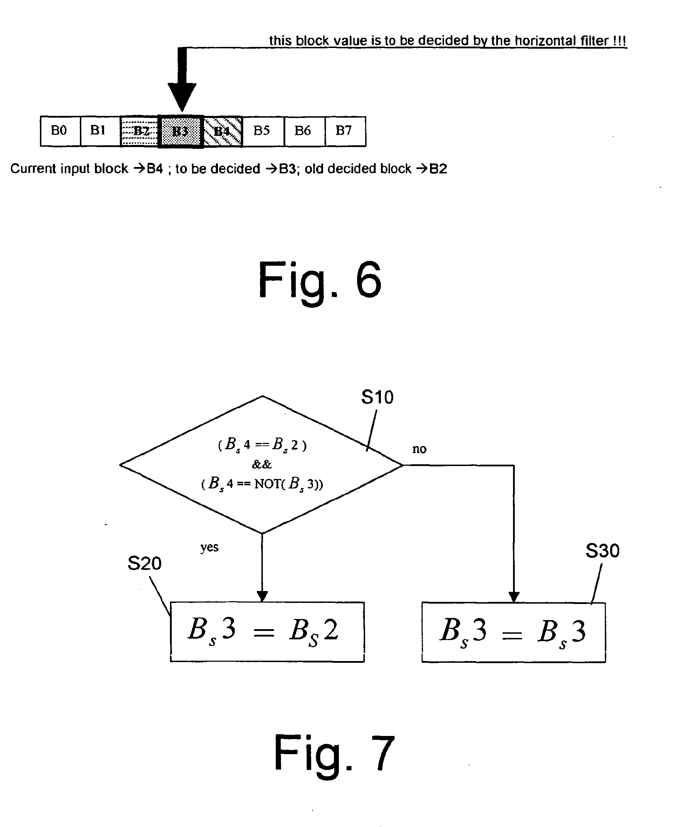

An example of the application of horizontal filter is illustrated in Fig. 6. A current pattern of three bits B2, B3, B4 is evaluated. The data values at positions B2, B3 and B4 are compared and upon detecting the centre value B3 to differ from the neighboring values B2, B4, the center value B3 is replaced by the value of the neighboring data items. Consequently, if the horizontal filter detects an irregularity in a binary sequence of "010" or "101", this irregularity is changed to a sequence of "000" or "111". In a corresponding manner, the evaluated sequence for detecting and removing an irregularity may have a larger width such as, for instance, 5 data items B1-B5. Accordingly, an irregularity in the binary sequence "00100" or "11011" is changed to "00000" or "11111", respectively.

The processing for three data items as evaluated above is illustrated in Fig. 7. In step S10, an irregularly pattern is compared with a current data value at block positions B2, B3, and B4. If the center pattern B3 is different from the neighboring patterns B2, B4, an irregularity is detected and replaced by the value of the neighboring position in step S20. In contrast, if no irregularity is detected, the current data item is not changed (step S30).

The mode processing for $B_m$ is similar to the processing for $B_s$.

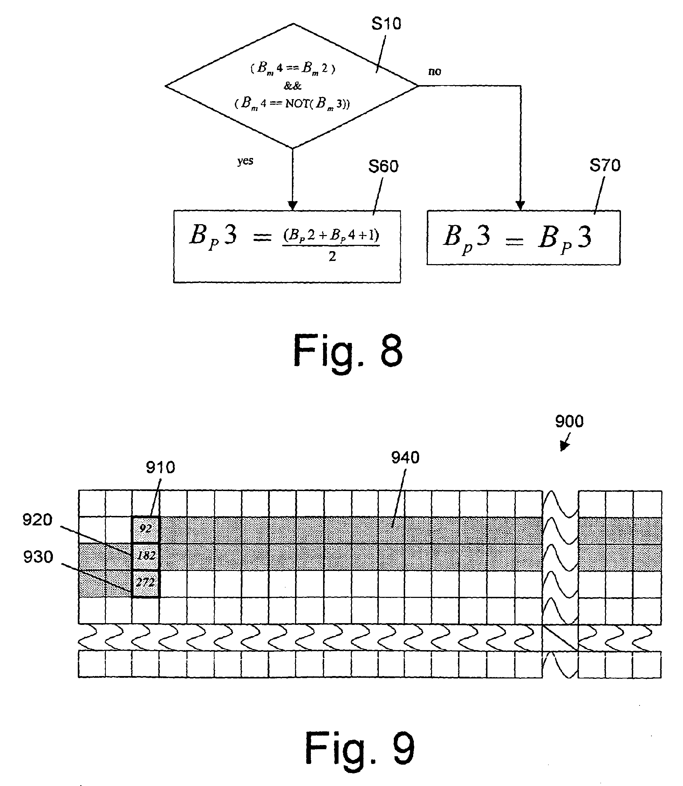

The filtering process for the motion phase data items, described in connection with Fig. 8, differs slightly from the above process. The motion phase indication is preferably represented by a three bit value ($B_p$). In addition, the motion phases are directly dependent on the detected film/video mode. If the film/video mode information ($B_m$) is changed due to an irregularity detection in step S10, the respective motion phase ($B_p$) is changed accordingly in step S60 (cf. Fig. 8). Upon changing a film/video mode indication due to a detected irregularity, a new motion phase value is to be calculated based on the motion phase of the previous and subsequent block B2, B4. These two motion phases are averaged and round up to obtain the phase information for intermediate block B3. On the other hand, if the film/video mode value is not changed (step S30), the motion phase information is also maintained (step S70).

While the filtering as described by way of example with reference to horizontal filtering in Fig. 6, Fig. 7 and Fig. 8, a vertical filtering is performed in a respective manner. However, the hardware effort slightly increases, as a horizontal filtering operation only requires a memory capacity for a number of data items corresponding to the number of blocks evaluated, i.e. preferably three adjacent blocks. In contrast, a vertical filtering operation requires a memory capacity for storing data items of a respective number of rows, i.e. preferably two rows of blocks and an additional block for evaluating three vertically adjacent blocks. This memory requirement is illustrated in Fig. 9.

Reference numeral 900 designates the field of auxiliary data of a complete image. The data items 940, to be stored for processing the vertically adjacent data items 910, 920 and 930, are marked as grey colored blocks in Fig. 9.

The above described filtering operations are applicable to all block positions, except the border rows and border columns. In order to appropriately process these blocks, either the vertical or the horizontal filtering operation is disabled, due to a lack of neighbouring data. For the first and the last row, the vertical filtering is disabled and for the first and the last column the horizontal filtering is disabled.

According to a preferred embodiment, a plurality of irregularity patterns are stored in a look-up-table. A pattern to be evaluated is compared to a set of stored irregularity patterns. In case a current pattern matches one of the stored patterns, an irregularity is detected and removed from the field of data items.

Preferably, the recorded irregularity patterns have stored associated replacement patterns. These replacement patterns can be used as an alternative embodiment to the replacement processing described in connection with Fig. 6, Fig. 7 and Fig. 8.

The use of a look-up-table further enables to employ two dimensional irregularity patterns, for instance, block patterns of a 4x4 block size. An example thereof is indicated by $X_6$ in Fig. 5. Two dimensional block patterns can eliminate with more accuracy diagonal, horizontal and vertical and other kinds of unwanted auxiliary data configurations.

Summarizing, the present invention relates to a pre-processing of auxiliary data of a video sequence in order to enable improved processing results for applying picture improvement algorithms. Irregularities occurring within an auxiliary data field providing data items on a block basis are detected and removed. In particular, a film/video mode indication or a motion/still indication is processed accordingly. The removal of irregularities enables a respective improved image processing, for instance, interpolation processing during up-conversion and interlaced/progressive conversion.

**Claims**

1. A method for processing auxiliary information of a sequence of video images, each video image being divided into a plurality of blocks, the method comprising the steps of:

   receiving a field of auxiliary information including a data item (10, 20, 30) for each of the blocks of an image, said auxiliary information indicating at least one of whether an image block contains motion or still image data and whether an image block contains film mode or video mode data, and

subjecting said received field of auxiliary information to filtering by comparing a data item of a block with data items of neighboring blocks in order to detect and eliminate an irregularity in the data items of said field of auxiliary information, the detection and elimination being performed in a row or column direction, wherein individual data items (83) are detected and eliminated which do not have at least two neighbouring data items (B2, B3) of a corresponding value either in horizontal or in vertical direction.

**2.** A method according to claim 1, wherein a single bit ($B_s$) is provided for each block to indicate motion or still image data.

**3.** A method according to any of claims 1 or 2, wherein said auxiliary information indicating whether or not an image block containing film mode or video mode data.

**4.** A method according to claim 3, wherein a single bit ($B_m$) is provided for each block to indicate film mode or video mode.

**5.** A method according to claim 3 or 4, wherein said auxiliary information further containing phase information indicating the individual motion scheme of a film mode block.

**6.** A method according to claim 5, wherein at least three bits ($B_p$) are provided for each block to indicate the individual motion scheme.

**7.** A method according to claim 6, wherein said at least three bits ($B_p$) include two bit combinations (PALO, PAL1) representing a PAL motion pattern.

**8.** A method according to claim 6 or 7, wherein said at least three bits ($B_p$) include five bit combinations (NTSC0-NTSC4) representing a NTSC motion pattern.

**9.** A method according to any of claims 6 to 8, wherein said at least three bits include a bit combination (cut) representing an image scene change.

**10.** A method according to any of claims 1 to 9, wherein individual auxiliary data items are detected and eliminated which do not have at least a single neighbouring data item of a corresponding value in horizontal and at least a single neighbouring data item of a corresponding value in vertical direction.

**11.** A method according to any of claims 1 to 9, wherein individual auxiliary data items are detected and eliminated which do not have at least two corresponding adjacent data items.

**12.** A method according to any of claims 1 to 11, wherein a detected irregular data item (B3) is eliminated by replacing the data item (B3) with the respective data item (B2) of a neighbouring block.

**13.** A method according to any of claims 1 to 12, wherein said detection step comprising the steps of:

comparing (S10) a current pattern of neighbouring block data with a pre-stored irregularity pattern, and

replacing (S20) the current pattern upon detecting the current pattern to match a pre-stored irregularity pattern.

**14.** A method according to claim 13, wherein the replacement pattern is stored in association with the respective irregularity pattern.

**15.** A method according to claim 13 or 14, wherein said current pattern (B2, B3, B4) having a length between 3 or 5 data items, in particular 3 data items.

**16.** A method according to claim 13 or 14, wherein said current pattern ($X_6$) extending two-dimensional.

**17.** A method for interpolating a sequence of video images based on motion compensation, wherein said interpolator processes received auxiliary data in accordance with the processing method of any of claims 1 to 16.

**18.** A signal processor for processing auxiliary information of a sequence of video images, the signal processor receiving a field of auxiliary information wherein each video image being divided into a plurality of blocks and said field of auxiliary information including a data item for each of the blocks of an image, said auxiliary information indicating at least one of whether an image block contains motion or still image data and whether an image block contains film mode or video mode data, the signal processor comprising a filter means for subjecting said received field of auxiliary information to filtering by comparing a data item of a block with data items of neighboring blocks in order to detect and eliminate an irregularity in the data items of said field of auxiliary information, the detection and elimination being performed in a row or column direction, wherein individual data items (83) are detected and eliminated which do not have at least two neighbouring data items (B2, B4) of a corresponding value either in horizontal or in vertical direction.

**19.** A signal processor according to claim 18, wherein a

single bit ($B_s$) is provided for each block to indicate motion or still image data.

20. A signal processor according to any of claims 18 or 19, wherein a single bit ($B_s$) is provided for each block to indicate motion or still image data.

21. A signal processor according to claim 20, wherein a single bit ($B_m$) is provided for each block to indicate film mode or video mode.

22. A signal processor according to claim 20 or 21, wherein said auxiliary information further containing phase information indicating the individual motion scheme of a video mode block.

23. A signal processor according to claim 22, wherein at least three bits ($B_p$) are provided for each block to indicate the individual motion scheme.

24. A signal processor according to claim 23, wherein said at least three bits ($B_p$) include two bit combinations (PALO, PAL1) representing a PAL motion pattern.

25. A signal processor according to claim 23 or 24, wherein said at least three bits ($B_p$) include five bit combinations (NTSC0-NTSC4) representing a NTSC motion pattern.

26. A signal processor according to any of claims 23 to 25, wherein said at least three bits include a bit combinations (cut) representing an image scene change.

27. A signal processor according to any of claims 18 to 26, wherein said filter means detecting and eliminating individual auxiliary data items which do not have at least a single neighbouring data item of a corresponding value in horizontal and at least a single neighbouring data item in vertical direction.

28. A signal processor according to any of claims 18 to 26, wherein said filter means detecting and eliminating individual auxiliary data items which do not have at least two corresponding adjacent data items.

29. A signal processor according to any of claims 18 to 28, wherein said filter means eliminating a detected irregular data item (B3) by replacing the data item (B3) with the respective data item (B2) of a neighbouring block.

30. A signal processor according to any of claims 18 to 29, wherein said filter means comprising:

a memory for storing at least one irregularity pattern,
a comparator for comparing a current pattern of neighbouring block data with said pre-stored irregularity pattern, and
a replacing unit for replacing the current pattern upon detecting the current pattern to match a pre-stored irregularity pattern.

31. A signal processor according to claim 30, wherein said memory further storing a replacement pattern in association with the respective irregularity pattern.

32. A signal processor according to claim 30 or 31, wherein said current pattern having a length between 3 or 5 data items, in particular 3 data items.

33. A signal processor according to claim 30 or 31, wherein said current pattern extending two-dimensional.

34. An interpolator for interpolating a sequence of video images based on motion compensation, said interpolator including a signal processor in accordance with any of claims 18 to 33 for processing received auxiliary data for performing said motion compensated interpolation.

**Patentansprüche**

1. Verfahren zum Verarbeiten von Hilfsinformation einer Folge von Videobildern, wobei jedes Videobild in eine Mehrzahl von Blöcken unterteilt ist und das Verfahren die Schritte umfasst:

Empfangen eines Feldes von Hilfsinformation mit einem Datenelement für jeden der Blöcke eines Bildes, wobei die Hilfsinformation angibt, ob ein Bildblock Bewegung oder stille Bilddaten enthält oder ob ein Bildblock Daten im Filmmodus oder Videomodus enthält und
Unterziehen des empfangenen Feldes von Hilfsinformation einer Filterung durch Vergleichen eines Datenelements eines Blocks mit Datenelementen von benachbarten Blöcken, um eine Unregelmäßigkeit in den Datenelementen des Hilfsinformationsfeldes zu erfassen und zu eliminieren, wobei das Erfassen und das Eliminieren in einer Zeilen- oder Spaltenrichtung durchgeführt werden und wobei diejenigen Datenelemente erfasst und eliminiert werden, die nicht mindestens zwei benachbarte Datenelemente mit einem entsprechenden Wert entweder in horizontaler oder in vertikaler Richtung aufweisen.

2. Verfahren nach Anspruch 1, wobei für jeden Block ein einziges Bit ($B_s$) zum Anzeigen von Bewegt- oder Stillbilddaten bereitgestellt wird.

3. Verfahren nach Anspruch 1 oder 2, wobei die Hilfsinformation anzeigt, ob ein Bildblock Daten im Filmmodus oder Videomodus enthält.

4. Verfahren nach Anspruch 3, wobei für jeden Block ein einziges Bit ($B_m$) zum Anzeigen des Filmmodus oder Videomodus bereitgestellt wird.

5. Verfahren nach Anspruch 3 oder 4, wobei die Hilfsinformation des Weiteren eine Phaseninformation zum Anzeigen eines individuellen Bewegungsschemas eines Filmmodus-Blocks enthält.

6. Verfahren nach Anspruch 5, wobei für jeden Block mindestens drei Bits ($B_p$) zum Anzeigen des individuellen Bewegungsschemas bereitgestellt werden.

7. Verfahren nach Anspruch 6, wobei die mindestens drei Bits ($B_p$) zwei Bitkombinationen (PAL0, PAL1) umfassen, die ein PAL Bewegungsmuster darstellen.

8. Verfahren nach Anspruch 6 oder 7, wobei die mindestens drei Bits ($B_p$) fünf Bitkombinationen (NTSC0-NTSC4) umfassen, die ein NTSC Bewegungsmuster darstellen.

9. Verfahren nach einem der Ansprüche 6 bis 8, wobei die mindestens drei Bits eine Bitkombination (cut) umfassen, die einen Bild-Szenewechsel darstellt.

10. Verfahren nach einem der Ansprüche 1 bis 9, wobei diejenigen Hilfsdatenelemente erfasst und eliminiert werden, die nicht mindestens ein benachbartes Hilfsdatenelement mit dem entsprechenden Wert in horizontaler Richtung und mindestens ein benachbartes Hilfsdatenelement mit dem entsprechenden Wert in vertikaler Richtung aufweisen.

11. Verfahren nach einem der Ansprüche 1 bis 9, wobei diejenigen Hilfsdatenelemente erfasst und eliminiert werden, die nicht mindestens zwei entsprechende benachbarte Datenelemente aufweisen.

12. Verfahren nach einem der Ansprüche 1 bis 11, wobei ein erfasstes unregelmäßiges Datenelement (B3) durch das Ersetzen mit einem jeweiligen Datenelement eines benachbarten Blocks eliminiert wird.

13. Verfahren nach einem der Ansprüche 1 bis 2, wobei der Erfassungsschritt die folgenden Schritte aufweist:

    Vergleichen (S10) eines aktuellen Musters der benachbarten Blockdaten mit einem vorgespeicherten Unregelmäßigkeitsmuster und Ersetzen (S20) des aktuellen Musters beim Detektieren einer Übereinstimmung zwischen dem aktuellen Muster und dem vorgespeicherten Unregelmäßigkeitsmuster.

14. Verfahren nach Anspruch 13, wobei das Ersatzmuster in Verknüpfung mit dem jeweiligen Unregelmäßigkeitsmuster abgespeichert ist.

15. Verfahren nach Anspruch 13 oder 14, wobei das aktuelle Muster (B2, B3, B4) eine Länge zwischen 3 und 5 und insbesondere 3 Datenelementen aufweist.

16. Verfahren nach Anspruch 13 oder 14, wobei das aktuelle Muster ($X_6$) zweidimensional ausgeweitet ist.

17. Verfahren zum Interpolieren einer Folge von Videobildern basierend auf Bewegungskompensation, wobei der Interpolator empfangene Hilfsdaten mit einem Verarbeitungsverfahren nach einem der Ansprüche 1 bis 16 verarbeitet.

18. Signalverarbeitungsvorrichtung zum Verarbeiten von Hilfsinformation einer Folge von Videobildern, wobei jedes Videobild in eine Mehrzahl von Blöcken unterteilt ist, die Signalverarbeitungsvorrichtung ein Feld von Hilfsinformation mit einem Datenelement für jeden der Blöcke eines Bildes empfängt, und die Hilfsinformation angibt, ob ein Bildblock Bewegung oder stille Bilddaten enthält oder ob ein Bildblock Daten in Filmmodus oder in Videomodus enthält, die Signalverarbeitungsvorrichtung umfasst eine Filtereinrichtung zum Unterziehen des empfangenen Feldes von Hilfsinformation einer Filterung durch Vergleichen eines Datenelements eines Blocks mit Datenelementen von benachbarten Blöcken, um eine Unregelmäßigkeit in den Datenelementen des Hilfsinformationsfeldes zu erfassen und zu eliminieren, wobei das Erfassen und das Eliminieren in einer Zeilen- oder Spaltenrichtung durchgeführt werden und wobei diejenigen Datenelemente (B3) erfasst und eliminiert werden, die nicht mindestens zwei benachbarte Datenelemente (B2, B4) mit einem entsprechenden Wert entweder in horizontaler oder in vertikaler Richtung aufweisen.

19. Signalverarbeitungsvorrichtung nach Anspruch 18, wobei für jeden Block ein einziges Bit ($B_s$) zum Anzeigen von Bewegt- oder Stillbilddaten bereitgestellt wird.

20. Signalverarbeitungsvorrichtung nach Anspruch 18 oder 19, wobei die Hilfsinformation anzeigt, ob ein Bildblock Daten im Filmmodus oder Videomodus enthält.

21. Signalverarbeitungsvorrichtung nach Anspruch 20, wobei für jeden Block ein einziges Bit ($B_m$) zum Anzeigen des Filmmodus oder Videomodus bereitgestellt wird.

**22.** Signalverarbeitungsvorrichtung nach Anspruch 20 oder 21, wobei die Hilfsinformation des Weiteren eine Phaseninformation zum Anzeigen eines individuellen Bewegungsschemas eines Filmmodus-Blocks enthält.

**23.** Signalverarbeitungsvorrichtung nach Anspruch 22, wobei für jeden Block mindestens drei Bits ($B_p$) zum Anzeigen des individuellen Bewegungsschemas bereitgestellt werden.

**24.** Signalverarbeitungsvorrichtung nach Anspruch 23, wobei die mindestens drei Bits ($B_p$) zwei Bitkombinationen (PAL0, PAL1) umfassen, die ein PAL Bewegungsmuster darstellen.

**25.** Signalverarbeitungsvorrichtung nach Anspruch 23 oder 24, wobei die mindestens drei Bits ($B_p$) fünf Bitkombinationen (NTSC0-NTSC4) umfassen, die ein NTSC Bewegungsmuster darstellen.

**26.** Signalverarbeitungsvorrichtung nach einem der Ansprüche 23 bis 25, wobei die mindestens drei Bits eine Bitkombination (cut) umfassen, die einen Bild-Szenewechsel darstellt.

**27.** Signalverarbeitungsvorrichtung nach einem der Ansprüche 18 bis 26, wobei die Filtereinrichtung diejenigen Hilfsdatenelemente erfasst und eliminiert, die nicht mindestens ein benachbartes Hilfsdatenelement mit dem entsprechenden Wert in horizontaler Richtung und mindestens ein benachbartes Hilfsdatenelement mit dem entsprechenden Wert in vertikaler Richtung aufweisen.

**28.** Signalverarbeitungsvorrichtung nach einem der Ansprüche 18 bis 26, wobei die Filtereinrichtung diejenigen Hilfsdatenelemente erfasst und eliminiert, die nicht mindestens zwei entsprechende benachbarte Datenelemente aufweisen.

**29.** Signalverarbeitungsvorrichtung nach einem der Ansprüche 18 bis 28, wobei die Filtereinrichtung ein erfasstes unregelmäßiges Datenelement (B3) durch das Ersetzen mit einem jeweiligen Datenelement eines benachbarten Blocks eliminiert.

**30.** Signalverarbeitungsvorrichtung nach einem der Ansprüche 18 bis 29, wobei die Filtereinrichtung umfasst:

einen Speicher zum Speichern von mindestens einem Unregelmäßigkeitsmuster,
einen Komparator zum Vergleichen eines aktuellen Musters der benachbarten Blockdaten mit einem vorgespeicherten Unregelmäßigkeitsmuster und
eine Ersetzungseinrichtung zum Ersetzen des aktuellen Musters beim Detektieren einer Übereinstimmung zwischen dem aktuellen Muster und dem vorgespeicherten Unregelmäßigkeitsmuster.

**31.** Signalverarbeitungsvorrichtung nach Anspruch 30, wobei der Speicher des Weiteren das Ersatzmuster in Verknüpfung mit dem jeweiligen Unregelmäßigkeitsmuster speichert.

**32.** Signalverarbeitungsvorrichtung nach Anspruch 30 oder 31, wobei das aktuelle Muster (B2, B3, B4) eine Länge zwischen 3 und 5 und insbesondere 3 Datenelementen aufweist.

**33.** Signalverarbeitungsvorrichtung nach Anspruch 30 oder 31, wobei das aktuelle Muster ($X_6$) zweidimensional ausgeweitet ist.

**34.** Interpolator zum Interpolieren einer Folge von Videobildern basierend auf Bewegungskompensation, wobei der Interpolator eine Signalverarbeitungsvorrichtung zum Verarbeiten von empfangenen Hilfsdaten nach einem der Ansprüche 18 bis 33 umfasst, um die Interpolation mit Bewegungskompensation auszuführen.

**Revendications**

**1.** Procédé de traitement des informations auxiliaires d'une séquence d'images vidéo, chaque image vidéo étant divisée en une pluralité de blocs, le procédé comprenant les étapes consistant à :

recevoir un champ d'informations auxiliaires incluant un élément de donnée (10, 20, 30) pour chacun des blocs d'une image, lesdites informations auxiliaires indiquant au moins l'un du fait qu'un bloc d'image contient des données d'image de mouvement ou d'image fixe et du fait qu'un bloc d'image contient des données de mode film ou de mode vidéo, et
soumettre ledit champ reçu d'informations auxiliaires à un filtrage en comparant un élément de donnée appartenant à un bloc comportant des éléments de données de blocs voisins afin de détecter et d'éliminer une irrégularité dans les éléments de données dudit champ d'informations auxiliaires, la détection et l'élimination étant exécutées dans la direction d'une ligne ou d'une colonne, dans lequel des éléments individuels de données (B3) ne possédant pas au moins deux éléments voisins de données (B2, B3) présentant une valeur correspondante soit dans la direction horizontale, soit dans la direction verticale, sont détectés et éliminés.

**2.** Procédé selon la revendication 1, dans lequel un bit unique ($B_s$) est prévu pour chaque bloc pour indiquer des données d'image de mouvement ou d'image fixe.

**3.** Procédé selon l'une quelconque des revendications 1 ou 2, dans lequel lesdites informations auxiliaires indiquent si un bloc d'image contient ou non des données de mode film ou de mode vidéo.

**4.** Procédé selon la revendication 3, dans lequel un bit unique ($B_m$) est prévu pour chaque bloc pour indiquer le mode film ou le mode vidéo.

**5.** Procédé selon la revendication 3 ou 4, dans lequel lesdites informations auxiliaires contiennent en outre des informations de phase indiquant le principe de mouvement individuel d'un bloc de mode film.

**6.** Procédé selon la revendication 5, dans lequel au moins trois bits ($B_p$) sont prévus pour chaque bloc pour indiquer le principe de mouvement individuel.

**7.** Procédé selon la revendication 6, dans lequel lesdits au moins trois bits ($B_p$) incluent deux combinaisons de bits (PALO, PAL1) représentant un motif de mouvement au standard PAL.

**8.** Procédé selon la revendication 6 ou 7, dans lequel lesdits au moins trois bits ($B_p$) incluent cinq combinaisons de bits (NTSC0 à NTSC4) représentant un motif de mouvement au standard NTSC.

**9.** Procédé selon l'une quelconque des revendications 6 à 8, dans lequel lesdits au moins trois bits incluent une combinaison de bits (cut) représentant un changement de scène de l'image.

**10.** Procédé selon l'une quelconque des revendications 1 à 9, dans lequel des éléments de données auxiliaires individuels ne possédant pas au moins un élément de donnée unique voisin d'une valeur correspondante dans la direction horizontale et au moins un élément de donnée unique voisin d'une valeur correspondante dans la direction verticale sont détectés et éliminés.

**11.** Procédé selon l'une quelconque des revendications 1 à 9, dans lequel des éléments de données auxiliaires individuels ne possédant pas au moins deux éléments de données adjacentes correspondantes sont détectés et éliminés.

**12.** Procédé selon l'une quelconque des revendications 1 à 11, dans lequel un élément de donnée irrégulier détecté (B3) est éliminé en remplaçant l'élément de donnée (B3) par l'élément de donnée respectif (B2) d'un bloc voisin.

**13.** Procédé selon l'une quelconque des revendications 1 à 12, dans lequel ladite étape de détection comprend les étapes consistant à :

comparer (S10) un motif en cours de données de bloc voisin avec un motif d'irrégularité mémorisé à l'avance, et
remplacer (S20) le motif en cours lors de la détection du motif en cours pour qu'il corresponde à un motif d'irrégularité mémorisé à l'avance.

**14.** Procédé selon la revendication 13, dans lequel le motif de remplacement est mémorisé en association avec le motif d'irrégularité respectif.

**15.** Procédé selon la revendication 13 ou 14, dans lequel ledit motif en cours (B2, B3, B4) présente une longueur comprise entre 3 ou 5 éléments de données, en particulier 3 éléments de données.

**16.** Procédé selon la revendication 13 ou 14, dans lequel ledit motif en cours ($X_6$) s'étend dans deux dimensions.

**17.** Procédé d'interpolation d'une séquence d'images vidéo sur la base d'une compensation de mouvement, dans lequel ledit dispositif d'interpolation traite des données auxiliaires reçues conformément au procédé de traitement de l'une quelconque des revendications 1 à 16.

**18.** Processeur de signal permettant de traiter des informations auxiliaires d'une séquence d'images vidéo, le processeur de signal recevant un champ d'informations auxiliaires dans lequel chaque image vidéo est divisée en une pluralité de blocs et ledit champ d'informations auxiliaires inclut un élément de donnée pour chacun des blocs d'une image, lesdites informations auxiliaires indiquant au moins l'un du fait qu'un bloc d'image contient des données d'image de mouvement ou d'image fixe et du fait qu'un bloc d'image contient des données de mode film ou de mode vidéo, le processeur de signal comprenant un moyen de filtrage permettant de soumettre ledit champ reçu d'informations auxiliaires à un filtrage en comparant un élément de donnée appartenant à un bloc comportant des éléments de données de bloc voisin afin de détecter et d'éliminer une irrégularité dans les éléments de données dudit champ d'informations auxiliaires, la détection et l'élimination étant exécutées dans la direction d'une ligne ou d'une colonne, dans lequel des éléments individuels de données (B3) ne possédant pas au moins deux éléments voisins de données (B2, B4) présentant une valeur correspondante soit dans la direction horizontale, soit dans la direction verticale, sont détectés et éliminés.

**19.** Processeur de signal selon la revendication 18, dans lequel un bit unique ($B_s$) est prévu pour chaque bloc pour indiquer des données d'image de mouvement ou d'image fixe.

**20.** Processeur de signal selon l'une quelconque des revendications 18 ou 19, dans lequel un bit unique ($B_s$) est prévu pour chaque bloc pour indiquer des données d'image de mouvement ou d'image fixe.

**21.** Processeur de signal selon la revendication 20, dans lequel un bit unique ($B_m$) est prévu pour chaque bloc pour indiquer le mode film ou le mode vidéo.

**22.** Processeur de signal selon la revendication 20 ou 21, dans lequel lesdites informations auxiliaires contiennent en outre des informations de phase indiquant le principe de mouvement individuel d'un bloc de mode vidéo.

**23.** Processeur de signal selon la revendication 22, dans lequel au moins trois bits ($B_p$) sont prévus pour chaque bloc pour indiquer le principe de mouvement individuel.

**24.** Processeur de signal selon la revendication 23, dans lequel lesdits au moins trois bits ($B_p$) incluent deux combinaisons de bits (PALO, PAL1) représentant un motif de mouvement au standard PAL.

**25.** Processeur de signal selon la revendication 23 ou 24, dans lequel lesdits au moins trois bits ($B_p$) incluent cinq combinaisons de bits (NTSC0 à NTSC4) représentant un motif de mouvement au standard NTSC.

**26.** Processeur de signal selon l'une quelconque des revendications 23 à 25, dans lequel lesdits au moins trois bits incluent une combinaison de bits (cut) représentant un changement de scène de l'image.

**27.** Processeur de signal selon l'une quelconque des revendications 18 à 26, dans lequel ledit moyen de filtrage détecte et élimine des éléments de données auxiliaires individuels qui ne possèdent pas au moins un élément de donnée unique voisin d'une valeur correspondante dans la direction horizontale et au moins un élément de donnée unique voisin dans la direction verticale.

**28.** Processeur de signal selon l'une quelconque des revendications 18 à 26, dans lequel ledit moyen de filtrage détecte et élimine des éléments de données auxiliaires individuels qui ne possèdent pas au moins deux éléments de données adjacentes correspondantes.

**29.** Processeur de signal selon l'une quelconque des revendications 18 à 28, dans lequel ledit moyen de filtrage élimine un élément de donnée irrégulier détecté (B3) en remplaçant l'élément de donnée (B3) par l'élément de donnée respectif (B2) d'un bloc voisin.

**30.** Processeur de signal selon l'une quelconque des revendications 18 à 29, dans lequel ledit moyen de filtrage comprend :

une mémoire permettant de mémoriser au moins un motif d'irrégularité,
un comparateur permettant de comparer un motif en cours de données d'un bloc voisin au dit motif d'irrégularité mémorisé à l'avance, et
une unité de remplacement permettant de remplacer le motif en cours lors de la détection du motif en cours pour qu'il corresponde à un motif d'irrégularité mémorisé à l'avance.

**31.** Processeur de signal selon la revendication 30, dans lequel ladite mémoire mémorise en outre un motif de remplacement en association avec le motif d'irrégularité respectif.

**32.** Processeur de signal selon la revendication 30 ou 31, dans lequel ledit motif en cours présente une longueur comprise entre 3 ou 5 éléments de données, en particulier 3 éléments de données.

**33.** Processeur de signal selon la revendication 30 ou 31, dans lequel ledit motif en cours s'étend dans deux dimensions.

**34.** Dispositif d'interpolation permettant d'interpoler une séquence d'images vidéo sur la base d'une compensation de mouvement, ledit dispositif d'interpolation incluant un processeur de signal conforme à l'une quelconque des revendications 18 à 33 afin de traiter des données auxiliaires reçues dans le but d'exécuter ladite interpolation compensée de mouvement.

| | B(0,0) | B(1,0) | B(2,0) | B(3,0) | B(4,0) | B(5,0) | B(6,0) | B(7,0) | | | $B(x_{max}-1,0)$ |
|---|---|---|---|---|---|---|---|---|---|---|---|
| | B(0,1) | B(1,1) | B(2,1) | B(3,1) | B(4,1) | B(5,1) | B(6,1) | B(7,1) | | | |
| | B(0,2) | B(1,2) | B(2,2) | B(3,2) | B(4,2) | B(5,2) | B(6,2) | B(7,2) | | | |
| | B(0,3) | B(1,3) | B(2,3) | B(3,3) | B(4,3) | B(5,3) | B(6,3) | B(7,3) | | | |
| | B(0,4) | B(1,4) | B(2,4) | B(3,4) | B(4,4) | B(5,4) | B(6,4) | B(7,4) | | | |
| | B(0,5) | B(1,5) | B(2,5) | B(3,5) | B(4,5) | B(5,5) | B(6,5) | B(7,5) | | | |
| | B(0,6) | B(1,6) | B(2,6) | B(3,6) | B(4,6) | B(5,6) | B(6,6) | B(7,6) | | | |
| | $B(0, y_{max}-1)$ | | | | | | | | | | $B(x_{max}-1, y_{max}-1)$ |

Fig. 1

Content of a block is Phase, Mode and Still

3 bit value for Phase [ $B_p$ ] ———— 10

1 ← 1 bit value for Mode [ $B_m$ ] ———— 20

5 bit aux. data for each block

1 bit value for Still [ $B_s$ ] ———— 30

# Fig. 2

```
            0   1   2   3   4   5   6   7   8
Timslots    ├───┼───┼───┼───┼───┼───┼───┼───┤ ──→ 1/50 sec
PAL

Film Frames  │   0   │   1   │   2   │   3   │

Video Fields │ E₀ │ O₀ │ E₁ │ O₁ │ E₂ │ O₂ │ E₃ │ O₃ │

Motion Bit    1    0    1    0    1    0    1    0
```

```
            0  1  2  3  4  5  6  7  8  9  10
Timeslots   ├──┼──┼──┼──┼──┼──┼──┼──┼──┼──┤ ──→ 1/60 sec
NTSC

Film Frames  │   0    │   1   │   2   │   3   │

Video Fields │ E₀ │ O₀ │ E▒ │ O₁ │ E₁ │ O₂ │ E₂ │ O▒ │ E₃ │ O₃ │

Motion Bit    1   0   0   1   0   1   0   0   1   0
```

# Fig. 3

| Name | Bit value of Phase LSB 1 = rnotion 0 = still | | | Hex | Motionbitregister Bit value[0] MSB oldest LSB current if 1 = motion if 0 = still | | | | | | | | Description |
|---|---|---|---|---|---|---|---|---|---|---|---|---|---|---|
| | MSB | | LSB | | MSB | | | | | | | LSB | | |
| PAL0 | 0 | 0 | 0 | 0 | 1 | 0 | 1 | 0 | 1 | 0 | 1 | 0 | The content of the motion bit register shows the |
| PAL1 | 0 | 0 | 1 | 1 | 0 | 1 | 0 | 1 | 0 | 1 | 0 | 1 | value of the least significant bit at Phase over the last |
| NTSC0 | 0 | 1 | 0 | 2 | 1 | 0 | 0 | 1 | 0 | 1 | 0 | 0 | 8 fields. Current field/block information is |
| NTSC1 | 0 | 1 | 1 | 3 | 0 | 0 | 1 | 0 | 1 | 0 | 0 | 1 | LSB and oldest is MSB. |
| NTSC2 | 1 | 0 | 0 | 4 | 0 | 1 | 0 | 1 | 0 | 0 | 1 | 0 | |
| NTSC3 | 1 | 0 | 1 | 5 | 1 | 0 | 1 | 0 | 0 | 1 | 0 | 1 | |
| NTSC4 | 1 | 1 | 0 | 6 | 0 | 1 | 0 | 0 | 1 | 0 | 1 | 0 | |
| cut | 1 | 1 | 1 | 7 | Cut | | | | | | | | |

# Fig. 4

EP 1 592 259 B1

Fig. 5

this block value is to be decided by the horizontal filter !!!

| B0 | B1 | B2 | B3 | B4 | B5 | B6 | B7 |

Current input block →B4 ; to be decided →B3; old decided block →B2

# Fig. 6

S10

$$(B_s 4 == B_s 2)$$
$$\&\&$$
$$(B_s 4 == \text{NOT}(B_s 3))$$

no

yes

S20

$$B_s 3 = B_S 2$$

S30

$$B_s 3 = B_s 3$$

# Fig. 7

S10

$$(B_m 4 == B_m 2)$$
$$\&\&$$
$$(B_m 4 == NOT(B_m 3))$$

no

yes

S60

$$B_P 3 \;=\; \frac{(B_P 2 + B_P 4 + 1)}{2}$$

S70

$$B_p 3 \;=\; B_P 3$$

# Fig. 8

900

910    940

920

930

92

182

272

# Fig. 9

**EP 1 592 259 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0596963 A
- WO 0152552 A
- US 6141448 A
- US 6094228 A